# EUROPEAN PATENT APPLICATION

(11) **EP 3 719 173 A1**
(43) Date of publication of application: **07.10.2020**
(21) Application number: 19210421.4
(22) Date of filing: 20.11.2019
(51) Int. Cl.: C25B 1/04, C25B 15/02, A62C 3/08, C25B 15/08

(54) **PROCESS WATER THERMAL MANAGEMENT OF ELECTROCHEMICAL INERT GAS GENERATING SYSTEM**

(30) Priority: 04.04.2019 US 201916375618
(71) Applicant: Hamilton Sundstrand Corporation, Charlotte, NC 28217-4578 (US)
(72) Inventor: RHEAUME, Jonathan, West Hartford, CT Connecticut 06119 (US)
(74) Representative: Dehns

(57) **Abstract**

A system is disclosed for providing inerting gas to a protected space. The system includes an electrochemical cell (10) comprising a cathode and an anode separated by a separator including a proton transfer medium. A supply of process water is provided to the anode (16), and inerting gas is produced at the cathode (14). A heat exchanger (38) is in operative fluid and thermal communication with the process water, and a temperature sensor is in operative thermal communication with the cathode (14) or the anode (16). A controller (36) is configured to provide a target temperature of the temperature sensor (31) through control of a flow rate of process water or a temperature of process water, or both a flow rate and a temperature of process water, through a process water thermal management flow path in operative thermal communication with the cathode (14) or the anode (16).

## Description

### BACKGROUND

The subject matter disclosed herein generally relates to systems for generating and providing inert gas to protected spaces and optionally also providing oxygen and/or power. More specifically, the subject matter relates to thermal management of such systems.

It is recognized that fuel vapors within fuel tanks become combustible or explosive in the presence of oxygen. An inerting system decreases the probability of combustion or explosion of flammable materials in a fuel tank by maintaining a chemically non-reactive or inerting gas, such as nitrogen-enriched air, in the fuel tank vapor space, also known as ullage. Three elements are required to initiate combustion or an explosion: an ignition source (e.g., heat), fuel, and oxygen. The oxidation of fuel may be prevented by reducing any one of these three elements. If the presence of an ignition source cannot be prevented within a fuel tank, then the tank may be made inert by: 1) reducing the oxygen concentration, 2) reducing the fuel concentration of the ullage to below the lower explosive limit (LEL), or 3) increasing the fuel concentration to above the upper explosive limit (UEL). Many systems reduce the risk of oxidation of fuel by reducing the oxygen concentration by introducing an inerting gas such as nitrogen-enriched air (NEA) (i.e., oxygen-depleted air or ODA) to the ullage, thereby displacing oxygen with a mixture of nitrogen and oxygen at target thresholds for avoiding explosion or combustion.

It is known in the art to equip vehicles (e.g., aircraft, military vehicles, etc.) with onboard inerting gas generating systems, which supply nitrogen-enriched air to the vapor space (i.e., ullage) within the fuel tank. The nitrogen-enriched air has a substantially reduced oxygen content that reduces or eliminates oxidizing conditions within the fuel tank. Onboard inerting gas generating systems typically use membrane-based gas separators. Such separators contain a membrane that is permeable to oxygen and water molecules, but relatively impermeable to nitrogen molecules. A pressure differential across the membrane causes oxygen molecules from air on one side of the membrane to pass through the membrane, which forms oxygen-enriched air (OEA) on the low-pressure side of the membrane and nitrogen-enriched air (NEA) on the highpressure side of the membrane. The requirement for a pressure differential necessitates a source of compressed or pressurized air. Another type of gas separator is based on an electrochemical cell such as a proton exchange membrane (PEM) electrochemical cell, which produces NEA by electrochemically generating protons for combination with oxygen to deplete air of combustible oxygen

### BRIEF DESCRIPTION

A system is disclosed for providing inerting gas to a protected space. The system includes an electrochemical cell comprising a cathode and an anode separated by a separator comprising a proton transfer medium. A cathode fluid flow path is in operative fluid communication with the cathode between a cathode fluid flow path inlet and a cathode fluid flow path outlet. An anode fluid flow path is in operative fluid communication with the anode between an anode fluid flow path inlet and an anode fluid flow path outlet. A cathode supply fluid flow path is between an air source and the cathode fluid flow path inlet, and an inerting gas flow path in operative fluid communication with the cathode fluid flow path outlet and the protected space. An anode supply fluid flow path is between a supply of process water (i.e., a process water source) and the anode fluid flow path inlet.

The system for providing inerting gas includes thermal management. Thermal management includes a heat exchanger in operative fluid and thermal communication with the process water. A temperature sensor is in operative thermal communication with the cathode or the anode, or with both the cathode and the anode. A flow control device is arranged to control a flow of process water to a flow path in operative thermal communication with the cathode or anode, or with both the cathode and the anode. A controller is configured to provide a target temperature of the temperature sensor through control of a flow rate of process water or a temperature of process water, or both a flow rate and a temperature of process water, through a process water thermal management flow path in operative thermal communication with the cathode or the anode or with both the cathode and the anode.

In some aspects, the heat exchanger can include a heat rejection side in operative fluid communication with the process water thermal management flow path, and a heat absorption side in operative thermal communication with a heat sink.

In any one or combination of the foregoing aspects, the heat exchanger can include a heat absorption side in operative fluid communication with the process water thermal management flow path, and a heat rejection side in operative thermal communication with a heat source.

In any one or combination of the foregoing aspects, the process water thermal management flow path can include the anode fluid flow path, or the cathode fluid flow path, or a fluid flow path in operative thermal communication with the cathode or with the anode or with both the cathode and the anode and in fluid isolation from the cathode and fluid flow paths.

In any one or combination of the foregoing aspects, the process water thermal management flow path can include the anode fluid flow path.

In any one or combination of the foregoing aspects, the process water thermal management flow path can include the cathode fluid flow path.

In any one or combination of the foregoing aspects, the process water thermal management flow path can include the fluid flow path in operative thermal communication with the cathode or with the anode or with both the cathode and the anode and in fluid isolation from the cathode and fluid flow paths.

In any one or combination of the foregoing aspects, the fluid flow path in operative thermal communication with the cathode or with the anode or with both the cathode and the anode and in fluid isolation from the cathode and fluid flow paths can include a conduit disposed on the cathode fluid flow path or anode fluid flow path.

In any one or combination of the foregoing aspects, the system can include a plurality of said electrochemical cells in a stack separated by electrically-conductive fluid flow separators wherein the fluid flow path in operative thermal communication with the cathode or with the anode or with both the cathode and the anode and in fluid isolation from the cathode and fluid flow paths includes an internal passage through one or more of the electrically-conductive fluid flow separators.

In any one or combination of the foregoing aspects, the system can include a plurality of the electrochemical cells in a stack separated by electrically-conductive fluid flow separators.

Also disclosed is a system for providing inerting gas to a protected space. The system includes an electrochemical cell comprising a cathode and an anode separated by a separator comprising a proton transfer medium. A cathode fluid flow path is in operative fluid communication with the cathode between a cathode fluid flow path inlet and a cathode fluid flow path outlet. An anode fluid flow path is in operative fluid communication with the anode between an anode fluid flow path inlet and an anode fluid flow path outlet. A cathode supply fluid flow path is between an air source and the cathode fluid flow path inlet, and an inerting gas flow path in operative fluid communication with the cathode fluid flow path outlet and the protected space. An anode supply fluid flow path is between a process water source and the anode fluid flow path inlet. A cooling water fluid flow path is in operative fluid communication with the process water source, said cooling water fluid flow path in operative thermal communication with the cathode or with the anode or with both the anode and the cathode, and in fluid isolation from the cathode fluid flow path and the anode fluid flow path.

Also disclosed is a method of inerting a protected space. According to the method, process water is delivered to an anode of an electrochemical cell comprising the anode and a cathode separated by a separator comprising a proton transfer medium. Air is delivered to the cathode along with oxygen is reduced at the cathode to generate oxygen-depleted air. The oxygen-depleted air is directed from the cathode of the electrochemical cell along an inerting gas flow path to the protected space. A flow rate of process water or a temperature of process water is controlled, or both a flow rate and a temperature of process water are controlled, on a process water thermal management flow path in operative thermal communication with the cathode or the anode or with both the cathode and the anode, to provide a target temperature at the anode or at the cathode or at both the anode and the cathode.

In some aspects, the method can further include directing the process water through a heat rejection side of a heat exchanger comprising a heat absorption side in operative fluid communication with a heat sink.

In any one or combination of the foregoing aspects, the method can further include directing the process water through a heat absorption side of a heat exchanger comprising a heat rejection side in operative thermal communication with a heat source.

In any one or combination of the foregoing aspects, the process water thermal management flow path can include the anode fluid flow path, or the cathode fluid flow path, or a fluid flow path in operative thermal communication with the cathode or with the anode or with both the cathode and the anode and in fluid isolation from the cathode and fluid flow paths.

In any one or combination of the foregoing aspects, the process water thermal management flow path can include the anode fluid flow path.

In any one or combination of the foregoing aspects, the process water thermal management flow path can include the cathode fluid flow path.

In any one or combination of the foregoing aspects, the process water thermal management flow path can include the fluid flow path in operative thermal communication with the cathode or with the anode or with both the cathode and the anode and in fluid isolation from the cathode and fluid flow paths.

In any one or combination of the foregoing aspects, the fluid flow path in operative thermal communication with the cathode or with the anode or with both the cathode and the anode and in fluid isolation from the cathode and fluid flow paths can include a conduit disposed on the cathode fluid flow path or anode fluid flow path.

In any one or combination of the foregoing aspects, the method can further include a plurality of said electrochemical cells in a stack separated by electrically-conductive fluid flow separators wherein the fluid flow path in operative thermal communication with the cathode or with the anode or with both the cathode and the anode and in fluid isolation from the cathode and fluid flow paths includes an internal passage through one or more of the electrically-conductive fluid flow separators.

### BRIEF DESCRIPTION OF THE DRAWINGS

The following descriptions should not be considered limiting in any way. With reference to the accompanying drawings, like elements are numbered alike:
FIG. 1A is a schematic illustration of an aircraft that can incorporate various embodiments of the present disclosure;
FIG. 1B is a schematic illustration of a bay section of the aircraft of FIG. 1A;
FIG. 2 is a schematic depiction an example embodiment of an electrochemical cell;
FIG. 3 is a schematic illustration of an example embodiment of an electrochemical water treatment system;

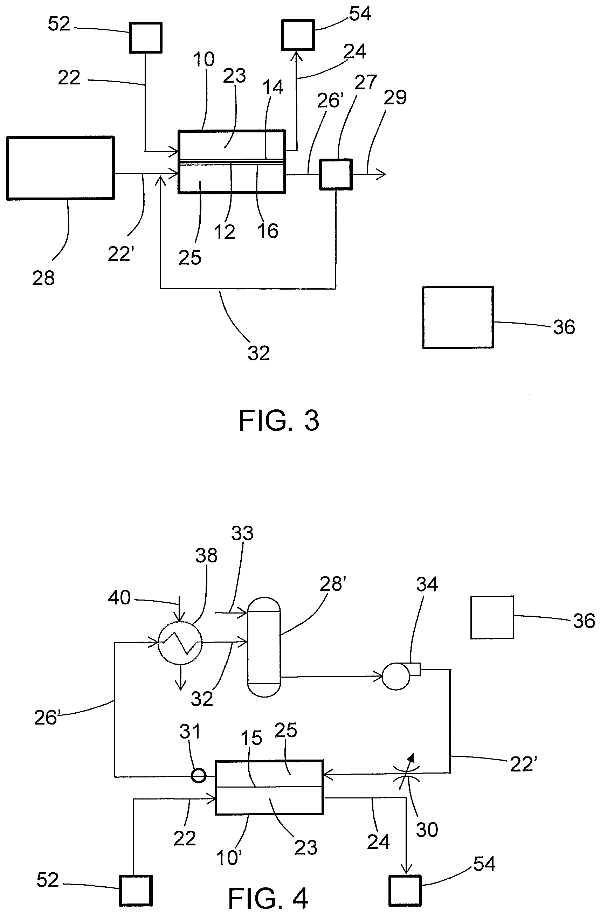

FIG. 3 is a schematic illustration of an example embodiment of an electrochemical inert gas generating system;
FIG. 4 is a schematic illustration of an example embodiment of an electrochemical inert gas generating system with thermal management;

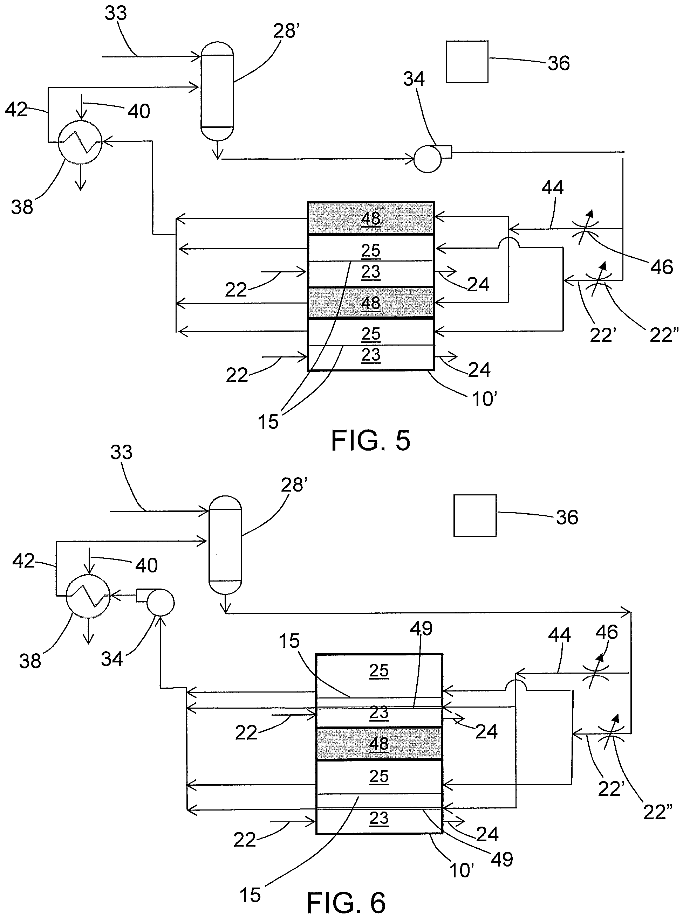

FIG. 5 is a schematic illustration of an example embodiment of another electrochemical inert gas generating system with thermal management; and
FIG. 6 is a schematic illustration of an example embodiment of another electrochemical inert gas generating system with thermal management.

### DETAILED DESCRIPTION

A detailed description of one or more embodiments of the disclosed apparatus and method are presented herein by way of exemplification and not limitation with reference to the Figures.

Although shown and described above and below with respect to an aircraft, embodiments of the present disclosure are applicable to on-board systems for any type of vehicle or for on-site installation in fixed systems. For example, military vehicles, heavy machinery vehicles, sea craft, ships, submarines, etc., may benefit from implementation of embodiments of the present disclosure. For example, aircraft and other vehicles having fire suppression systems, emergency power systems, and other systems that may electrochemical systems as described herein may include the redundant systems described herein. As such, the present disclosure is not limited to application to aircraft, but rather aircraft are illustrated and described as example and explanatory embodiments for implementation of embodiments of the present disclosure.

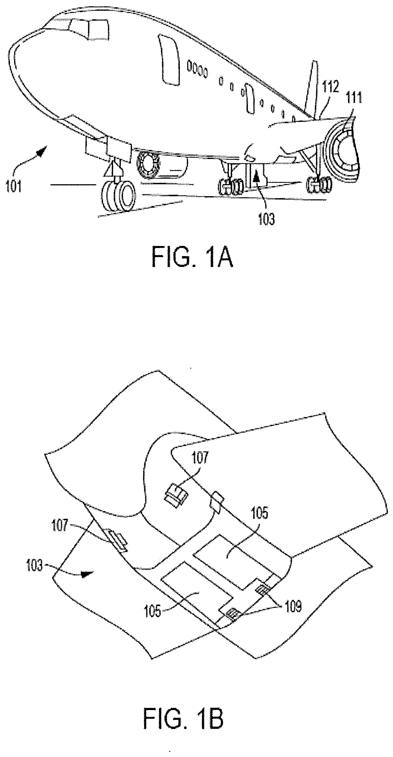

As shown in FIGS. 1A-1B, an aircraft includes an aircraft body 101, which can include one or more bays 103 beneath a center wing box. The bay 103 can contain and/or support one or more components of the aircraft 101. For example, in some configurations, the aircraft can include environmental control systems (ECS) and/or on-board inerting gas generation systems (OBIGGS) within the bay 103. As shown in FIG. 1B, the bay 103 includes bay doors 105 that enable installation and access to one or more components (e.g., OBIGGS, ECS, etc.). During operation of environmental control systems and/or fuel inerting systems of the aircraft, air that is external to the aircraft can flow into one or more ram air inlets 107. The outside air may then be directed to various system components (e.g., environmental conditioning system (ECS) heat exchangers) within the aircraft. Some air may be exhausted through one or more ram air exhaust outlets 109.

Also shown in FIG. 1A, the aircraft includes one or more engines 111. The engines 111 are typically mounted on the wings 112 of the aircraft and are connected to fuel tanks (not shown) in the wings, but may be located at other locations depending on the specific aircraft configuration. In some aircraft configurations, air can be bled from the engines 111 and supplied to OBIGGS, ECS, and/or other systems, as will be appreciated by those of skill in the art.

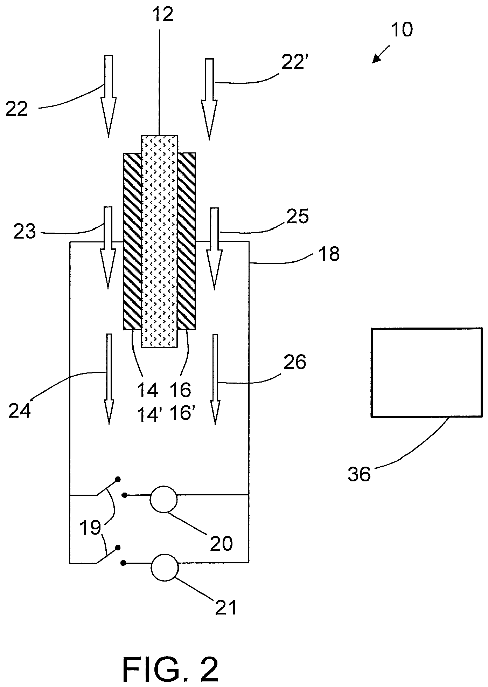

Referring now to FIG. 2, an electrochemical cell is schematically depicted. The electrochemical cell 10 comprises a separator 12 that includes an ion transfer medium. As shown in FIG. 2, the separator 12 has a cathode 14 disposed on one side and an anode 16 disposed on the other side. Cathode 14 and anode 16 can be fabricated from catalytic materials suitable for performing the needed electrochemical reaction (e.g., the oxygen-reduction reaction at the cathode and an oxidation reaction at the anode). Exemplary catalytic materials include, but are not limited to, nickel, platinum, palladium, rhodium, carbon, gold, tantalum, titanium, tungsten, ruthenium, iridium, osmium, zirconium, alloys thereof, and the like, as well as combinations of the foregoing materials. Cathode 14 and anode 16, including catalyst 14' and catalyst 16', are positioned adjacent to, and preferably in contact with the separator 12 and can be porous metal layers deposited (e.g., by vapor deposition) onto the separator 12, or can have structures comprising discrete catalytic particles adsorbed onto a porous substrate that is attached to the separator 12. Alternatively, the catalyst particles can be deposited on high surface area powder materials (e.g., graphite or porous carbons or metal-oxide particles) and then these supported catalysts may be deposited directly onto the separator 12 or onto a porous substrate that is attached to the separator 12. Adhesion of the catalytic particles onto a substrate may be by any method including, but not limited to, spraying, dipping, painting, imbibing, vapor depositing, combinations of the foregoing methods, and the like. Alternately, the catalytic particles may be deposited directly onto opposing sides of the separator 12. In either case, the cathode and anode layers 14 and 16 may also include a binder material, such as a polymer, especially one that also acts as an ionic conductor such as anion-conducting ionomers. In some embodiments, the cathode and anode layers 14 and 16 can be cast from an "ink," which is a suspension of supported (or unsupported) catalyst, binder (e.g., ionomer), and a solvent that can be in a solution (e.g., in water or a mixture of alcohol(s) and water) using printing processes such as screen printing or ink jet printing.

The cathode 14 and anode 16 can be controllably electrically connected by electrical circuit 18 to a controllable electric power system 20, which can include a power source (e.g., DC power rectified from AC power produced by a generator powered by a gas turbine engine used for propulsion or by an auxiliary power unit) and optionally a power sink 21. In some embodiments, the electric power system 20 can optionally include a connection to the electric power sink 21 (e.g., one or more electricity-consuming systems or components onboard the vehicle) with appropriate switching (e.g., switches 19), power conditioning, or power bus(es) for such on-board electricity-consuming systems or components, for optional operation in an alternative fuel cell mode.

With continued reference to FIG. 2, a cathode supply fluid flow path 22 directs gas from an air source (not shown) into contact with the cathode 14. Oxygen is electrochemically depleted from air along the cathode fluid flow path 23, and can be exhausted to the atmosphere or discharged as nitrogen-enriched air (NEA) (i.e., oxygen-depleted air, ODA) to an inerting gas flow path 24 for delivery to an on-board fuel tank (not shown), or to a vehicle fire suppression system associated with an enclosed space (not shown), or controllably to either or both of a vehicle fuel tank or an on-board fire suppression system. An anode fluid flow path 25 is configured to controllably receive an anode supply fluid from an anode supply fluid flow path 22'. The anode fluid flow path 25 includes water when the electrochemical cell is operated in an electrolytic mode to produce protons at the anode for proton transfer across the separator 12 (e.g., a proton transfer medium such as a proton exchange membrane (PEM) electrolyte or phosphoric acid electrolyte). If the system is configured for alternative operation in a fuel cell mode, the anode fluid flow path 25 can be configured to controllably also receive fuel (e.g., hydrogen). The protons formed at the anode are transported across the separator 12 to the cathode 14, leaving oxygen on the anode fluid flow path, which is exhausted through an anode exhaust 26. Control of fluid flow along these flow paths can be provided through conduits and valves (not shown), which can be controlled by a controller 36. The controller can include a microprocessor that is programmed with instructions for sending signals to carry out control of any of the operations described herein.

Exemplary materials from which the electrochemical proton transfer medium can be fabricated include proton-conducting ionomers and ion-exchange resins. Ion-exchange resins useful as proton conducting materials include hydrocarbon- and fluorocarbon-type resins. Fluorocarbon-type resins typically exhibit excellent resistance to oxidation by halogen, strong acids, and bases. One family of fluorocarbon-type resins having sulfonic acid group functionality is NAFION™ resins (commercially available from E. I. du Pont de Nemours and Company, Wilmington, Del.). Alternatively, instead of an ion-exchange membrane, the separator 12 can be comprised of a liquid electrolyte, such as sulfuric or phosphoric acid, which may preferentially be absorbed in a porous-solid matrix material such as a layer of silicon carbide or a polymer than can absorb the liquid electrolyte, such as poly(benzoxazole). These types of alternative "membrane electrolytes" are well known and have been used in other electrochemical cells, such as phosphoric-acid fuel cells.

During operation of a proton transfer electrochemical cell in the electrolytic mode, water at the anode undergoes an electrolysis reaction according to the formulae:

H₂O → ½O₂ + 2H⁺ + 2e (1)

The electrons produced by this reaction are drawn from electrical circuit 18 powered by electric power source 20 connecting the positively charged anode 16 with the cathode 14. The hydrogen ions (i.e., protons) produced by this reaction migrate across the separator 12, where they react at the cathode 14 with oxygen in the cathode flow path 23 to produce water according to the formula

½O₂ + 2H⁺ + 2e → H₂O (2)

Removal of oxygen from cathode flow path 23 produces nitrogen-enriched air exiting the region of the cathode 14. The oxygen evolved at the anode 16 by the reaction of formula (1) is discharged as anode exhaust 26.

During operation of a proton transfer electrochemical cell in a fuel cell mode, fuel (e.g., hydrogen) at the anode undergoes an electrochemical oxidation according to the formula

H₂ → 2H⁺ + 2e (3)

The electrons produced by this reaction flow through electrical circuit 18 to provide electric power to the electric power sink 21. The hydrogen ions (i.e., protons) produced by this reaction migrate across the separator 12, where they react at the cathode 14 with oxygen in the cathode flow path 23 to produce water according to the formula (2).

½O₂ + 2H⁺ + 2e → H₂O (2)

Removal of oxygen from cathode flow path 23 produces nitrogen-enriched air exiting the region of the cathode 14.

As mentioned above, the electrolysis reaction occurring at the positively charged anode 16 requires water, and the ionic polymers used for a PEM electrolyte perform more effectively in the presence of water. Accordingly, in some embodiments, a PEM membrane electrolyte is saturated with water or water vapor. Although the reactions (1) and (2) are stoichiometrically balanced with respect to water so that there is no net consumption of water, in practice some amount of moisture will be removed through the cathode exhaust 24 and/or the anode exhaust 26 (either entrained or evaporated into the exiting gas streams). Accordingly, in some exemplary embodiments, water from a water source is circulated past the anode 16 along an anode fluid flow path (and optionally also past the cathode 14). Such water circulation can also provide cooling for the electrochemical cells. In some exemplary embodiments, water can be provided at the anode from humidity in air along an anode fluid flow path in fluid communication with the anode. In other embodiments, the water produced at cathode 14 can be captured and recycled to anode 16 (e.g., through a water circulation loop, not shown). It should also be noted that, although the embodiments are contemplated where a single electrochemical cell is employed, in practice multiple electrochemical cells will be electrically connected in series with fluid flow to the multiple cathode and anode flow paths routed through manifold assemblies.

An example embodiment of an inerting system that can be used as an on-board aircraft inerting system with an electrochemical cell 10 (or cell stack) is schematically shown in FIG. 3. As shown in FIG. 3, water from a process water source 28 is directed (e.g., by a pump, not shown) along the anode supply fluid flow path 22' to the anode fluid flow path 25, where it is electrolyzed at the anode 16 to form protons, and oxygen. The protons are transported across the separator 12 to the cathode 14, where they combine with electrons from an external circuit (18, FIG. 2) and oxygen from airflow along the cathode fluid flow path 23 to form water. Removal of the protons from the anode fluid flow path 25 leaves oxygen gas on the anode fluid flow path, which is discharged as anode exhaust 26 to an anode discharge fluid flow path 26'. As further shown in FIG. 3, the fluid flow path 26' includes a gas-liquid separator 27. Although water is consumed at the anode by electrolysis, the fluid exiting as anode exhaust 26 can include gaseous oxygen and water vapor, which is separated as a gas stream 29 that can be exhausted to atmosphere or can be used for other applications such as an oxygen stream directed to aircraft occupant areas, occupant breathing devices, an oxygen storage tank, or an emergency aircraft oxygen breathing system. The gas-liquid separator 27 can include a tank with a liquid space and a vapor space inside, allowing for liquid water to be removed from the liquid space and transported back to the electrochemical cell 10 through water return conduit 32. Additional gas-liquid separators can be used such as a coalescing filter, vortex gas-liquid separator, or membrane separator.

As further shown in FIG. 3, the electrochemical cell 10 (or cell stack) generates an inerting gas on the cathode fluid flow path 23 by depleting combustible oxygen from an air flow to produce oxygen-depleted air (ODA), also known as nitrogen-enriched air (NEA) at the cathode 14, which can be directed to a protected space 54 (e.g., a fuel tank ullage space, a fire suppression system, a cargo hold, an equipment bay). As shown in FIG. 3, an air source 52 (e.g., ram air, compressor bleed, blower) is directed to the cathode fluid flow path 23 where oxygen is depleted by reaction with protons that have crossed the separator 12 to form water at the cathode 14. The ODA thereby produced can be directed to the protected space 54. The inerting gas flow path (cathode exhaust 24) can include additional components (not shown) such as flow control valve(s), a pressure regulator or other pressure control device, and water removal device(s) such as a heat exchanger condenser, a membrane drier or other water removal device(s), or a filter or other particulate or contaminant removal devices. Additional information regarding the electrochemical production of ODA can be found in U.S. Patent 9,963,792, US Patent Application Publication No. 2017/0331131A1, and US Patent Application Serial No. 16/029,024, the disclosures of each of which are incorporated herein by reference in their entirety.

In some embodiments, the electrochemical cell can be used in an alternate mode to provide electric power for on-board power-consuming systems, as disclosed in the aforementioned US Patent Application Publication No. 2017/0331131A1. In this mode, fuel (e.g., hydrogen) is directed from a fuel source to the anode 16 where hydrogen molecules are split to form protons that are transported across the separator 12 to combine with oxygen at the cathode. Simultaneously, reduction and oxidation reactions exchange electrons at the electrodes, thereby producing electricity in an external circuit (18, 21 FIG. 2). Embodiments in which these alternate modes of operation can be utilized include, for example, operating the system in a first mode of water electrolysis (either continuously or at intervals) under normal aircraft operating conditions (e.g., in which an engine-mounted generator provides electrical power) and operating the system in a second mode of electrochemical electricity production in response to a demand for emergency electrical power (e.g., failure of an engine-mounted generator). ODA can be produced at the cathode 14 in each of these alternate modes of operation.

With reference now to FIG. 4, an example embodiment is shown of a gas inerting system utilizing an electrochemical cell stack 10' (including seals, end plates, and other hardware as known to the skilled person) and a thermal management system. Also, for ease of illustration, the separator 12, cathode 14, and anode 16 and flow paths for a stack are simplified with a representation of simple flow paths on each side of a single membrane electrode assembly (MEA) 15. It is noted that FIG. 4 shows counter-flow between the anode and cathode sides of the MEA 15 and that FIG. 3 shows co-flow; however, many configurations can utilize cross-flow configurations that for ease of illustration are not shown in the Figures herein. As shown in FIG. 4, the cathode side of the electrochemical cell stack 10' produces ODA on the cathode fluid flow path 23 as inerting gas for a protected space in the same manner as discussed above with respect to FIG. 3. Thermal management is provided as discussed in more detail below. It is noted that, although not shown in FIG. 4, process water for thermal management can also be in fluid and thermal communication with the cathode side of the electrochemical cell as will be understood by the skilled person. On the anode side, process water from a water source (e.g. a water reservoir 28' equipped with a process make-up water feed line 33) is directed along the anode supply fluid flow path 22' by a pump 34. The pump 34 provides a motive force to move the process water along the anode supply fluid flow path 22' and through a flow control valve 30 to the anode fluid flow path 25. As discussed above, oxygen is produced at the anode 16 and proceeds along with the process water on the fluid flow 26', where it is directed through to a heat exchanger 38. The location of the pump 34 shown in FIG. 4 is representative of one example embodiment, and the pump 34 can be at other locations in the system, e.g., on the anode discharge fluid flow path 26'. Oxygen or other gases on the process water fluid flow path can be removed by a gas-liquid separator (27, FIG. 3) (e.g., to avoid cavitation of pump 34) or can be separated in the water reservoir 28'. The heat exchanger 38 can provide heating or cooling from a heat sink/heat source along the fluid flow path 40 (e.g., RAM air, a refrigerant from a cooling system such as a vapor compression cooling system, a heat transfer fluid in fluid/thermal communication with a heat source (e.g., hot engine compressor bleed air destined for an on-board ECS or electric heater coils). Multiple heat exchangers (e.g., separate cooling heat exchangers and heating heat exchangers) can also be used. Process water exiting from the heat exchanger 38 is then returned to the water reservoir 28' along flow path 42.

In some embodiments, the controller 36 can be configured/programmed to control either the flow rate of process water and/or the temperature of the process water fluid flowing through the electrochemical stack 10'. A temperature sensor 31 is shown in FIG. 4 disposed in the flow path 26', and can measure the temperature of the process water as well as being in thermal communication with the anode (through the process water exiting the anode fluid flow path 25 where it was in fluid communication with the anode). The control of flow and/or temperature of the process water can provide a technical effect of removing a target amount of heat generated by the electrochemical cell. The enthalpy of the chemical reactions resulting from electrolytic generation of inerting gas occurring on the anode and cathode sides of the electrochemical cell are balanced, with water molecules being split on the anode side and atoms combined to form water on the cathode side. Accordingly, the electrical energy entered into the system results in generation of heat. At the same time, there are competing factors regarding a target temperature, with higher temperatures desired to promote electrolysis of water on the anode side, and lower temperatures favored on the cathode side to promote away from water vapor entering the inerting gas that is directed to a fuel tank ullage space where water vapor is not desired. Accordingly, achieving an optimum target temperature in the electrochemical cell through thermal management can be beneficial.

Flow rate of the process water through the electrochemical cell can be regulated by controlling the speed of the pump 34 or with a control valve (not shown) along the process water flow path (e.g., 22'). Control of process water temperature based on output from a temperature sensor (not shown) along the anode fluid flow path 25 (and/or a temperature sensor along the cathode fluid flow path 23) can be accomplished, for example, by controlling the flow of process water through the heat exchanger 38 (e.g., by controlling the speed of the pump 34 or by diverting a controllable portion of the output flow of the pump 34 through a bypass around the heat exchanger 38 with control valves (not shown)) or by controlling the flow of a heat transfer fluid through the heat exchanger 38 along the flow path represented by 40.

In some embodiments, process water for thermal management can be directed along a flow path that is in thermal communication with the anode 16 or with the cathode 14 or with both the anode 16 and the cathode 14, but is in fluid isolation from the cathode fluid flow path 23 and the anode fluid flow path 25. This can provide a beneficial technical effect of allowing for optimum water flow to the anode 16 for electrolysis to produce protons that remove oxygen at the cathode 14while allowing for separate control of cooling water to achieve optimum temperatures. Additionally, the design of separate flow paths for thermal management can provide for opposite-direction or cross-direction flows, and for multiple passes of thermal control water through anode or cathode fluid flow paths. Moreover, flows of water for thermal control on flow paths that are separate from the cathode and anode fluid flow paths allows for thermal management to be optimized without regard for impact on hydrodynamic effects on the electrochemical reactions occurring at the electrodes.

An example embodiment of a system with segregated thermal management fluid flow paths is schematically shown in FIG. 5. As shown in FIG. 5, a stack 10' of electrochemical cells with electrically-conductive fluid flow separators (i.e., bipolar plates) 48 between adjacent electrochemical cells is depicted. The stack 10' is shown with two electrochemical cells, but typical stacks will contain a greater number of cells. The system shown in FIG. 5 divides the process water flow to the stack 10', with anode supply flow path 22' flowing through control valve 22", and a thermal control flow path 44 flowing through control valve 46 and through passages disposed within the bipolar plates 48 (e.g., hollow bipolar plates). The outlet from the anode fluid flow paths 25 and the passages in the bipolar plates 48 are re-combined and then routed back to the water reservoir 28' in the same fashion as shown in FIG. 4.

Of course, routing of the thermal control process water through passages in the bipolar plates is one example embodiment of a thermal control flow path isolated from the cathode and anode fluid flow paths 23/25, and thermal control can be implemented with other example embodiments. One such example embodiment is shown in FIG. 6. As shown in FIG. 6, process water for thermal control is routed through conduits 49 disposed along the cathode fluid flow paths 23 to provide thermal management without addition of water into the cathode fluid flow path that could end up in fuel tanks.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an", "the", or "any" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A system for providing inerting gas to a protected space, comprising
an electrochemical cell (10) comprising a cathode (14) and an anode (16) separated by a separator comprising a proton transfer medium;
a cathode fluid flow path (23) in operative fluid communication with the cathode between a cathode fluid flow path inlet and a cathode fluid flow path outlet;
an anode fluid flow path (25) in operative fluid communication with the anode between an anode fluid flow path inlet and an anode fluid flow path outlet;
a cathode supply fluid flow path (22) between an air source and the cathode fluid flow path inlet, and an inerting gas flow path in operative fluid communication with the cathode fluid flow path outlet and the protected space;
an anode supply fluid flow path (22') between a supply of process water and the anode fluid flow path inlet; and
thermal management components including:
a heat exchanger (38) in operative fluid and thermal communication with the process water;
a temperature sensor (31) in operative thermal communication with the cathode or the anode, or with both the cathode and the anode;
a flow control device arranged to control a flow of process water to a flow path in operative thermal communication with the cathode or anode, or with both the cathode and the anode; and
a controller configured to provide a target temperature of the temperature sensor through control of a flow rate of process water or a temperature of process water, or both a flow rate and a temperature of process water, through a process water thermal management flow path in operative thermal communication with the cathode or the anode or with both the cathode and the anode.

2. The system of claim 1, wherein the heat exchanger includes a heat rejection side in operative fluid communication with the process water thermal management flow path, and a heat absorption side in operative thermal communication with a heat sink, or wherein the heat exchanger includes a heat absorption side in operative fluid communication with the process water thermal management flow path, and a heat rejection side in operative thermal communication with a heat source.

3. The system of claim 1 or 2, wherein the process water thermal management flow path includes the anode fluid flow path, or the cathode fluid flow path, or a fluid flow path in operative thermal communication with the cathode or with the anode or with both the cathode and the anode and in fluid isolation from the cathode and fluid flow paths.

4. The system of claim 3, wherein the process water thermal management flow path includes the anode fluid flow path, or
wherein the process water thermal management flow path includes the cathode fluid flow path.

5. The system of claim 3, wherein the process water thermal management flow path includes the fluid flow path in operative thermal communication with the cathode or with the anode or with both the cathode and the anode and in fluid isolation from the cathode and fluid flow paths.

6. The system of claim 5, wherein the fluid flow path in operative thermal communication with the cathode or with the anode or with both the cathode and the anode and in fluid isolation from the cathode and fluid flow paths comprises a conduit disposed on the cathode fluid flow path or anode fluid flow path, or comprising a plurality of said electrochemical cells in a stack separated by electrically-conductive fluid flow separators wherein the fluid flow path in operative thermal communication with the cathode or with the anode or with both the cathode and the anode and in fluid isolation from the cathode and fluid flow paths includes an internal passage through one or more of the electrically-conductive fluid flow separators.

7. The system of any preceding claim, comprising a plurality of said electrochemical cells in a stack separated by electrically-conductive fluid flow separators.

8. A system for providing inerting gas to a protected space, comprising
an electrochemical cell (10) comprising a cathode (14) and an anode (16) separated by a separator comprising a proton transfer medium;
a cathode fluid flow path (23) in operative fluid communication with the cathode between a cathode fluid flow path inlet and a cathode fluid flow path outlet;
an anode fluid flow path (25) in operative fluid communication with the anode between an anode fluid flow path inlet and an anode fluid flow path outlet;
a cathode supply fluid flow path (22) between an air source and the cathode fluid flow path inlet, and an inerting gas flow path in operative fluid communication with the cathode fluid flow path outlet and the protected space;
an anode supply fluid flow path (22') between a process water source and the anode fluid flow path inlet; and
a cooling water fluid flow path in operative fluid communication with the process water source, said cooling water fluid flow path in operative thermal communication with the cathode or with the anode or with both the anode and the cathode, and in fluid isolation from the cathode fluid flow path and the anode fluid flow path.

9. A method of inerting a protected space, comprising
delivering process water to an anode (16) of an electrochemical cell (10) comprising the anode and a cathode separated by a separator comprising a proton transfer medium;
delivering air to the cathode (14) and reducing oxygen at the cathode to generate oxygen-depleted air;
directing the oxygen-depleted air from the cathode (14) of the electrochemical cell along an inerting gas flow path to the protected space; and
controlling a flow rate of process water or controlling a temperature of process water, or controlling both a flow rate and a temperature of process water, on a process water thermal management flow path in operative thermal communication with the cathode or the anode or with both the cathode and the anode, to provide a target temperature at the anode or at the cathode or at both the anode and the cathode.

10. The method of claim 9, further comprising directing the process water through a heat rejection side of a heat exchanger comprising a heat absorption side in operative fluid communication with a heat sink, or
further comprising directing the process water through a heat absorption side of a heat exchanger comprising a heat rejection side in operative thermal communication with a heat source.

11. The method of claim 9 or 10, wherein the process water thermal management flow path includes the anode fluid flow path, or the cathode fluid flow path, or a fluid flow path in operative thermal communication with the cathode or with the anode or with both the cathode and the anode and in fluid isolation from the cathode and fluid flow paths.

12. The method of claim 11, wherein the process water thermal management flow path includes the anode fluid flow path, or wherein the process water thermal management flow path includes the cathode fluid flow path.

13. The method of claim 11, wherein the process water thermal management flow path includes the fluid flow path in operative thermal communication with the cathode or with the anode or with both the cathode and the anode and in fluid isolation from the cathode and fluid flow paths.

14. The method of claim 13, wherein the fluid flow path in operative thermal communication with the cathode or with the anode or with both the cathode and the anode and in fluid isolation from the cathode and fluid flow paths comprises a conduit disposed on the cathode fluid flow path or anode fluid flow path.

15. The method of claim 13, comprising a plurality of said electrochemical cells in a stack separated by electrically-conductive fluid flow separators wherein the fluid flow path in operative thermal communication with the cathode or with the anode or with both the cathode and the anode and in fluid isolation from the cathode and fluid flow paths includes an internal passage through one or more of the electrically-conductive fluid flow separators.
